# EUROPÄISCHE PATENTSCHRIFT

(11) **EP 2 880 534 B1**
(45) Veröffentlichungstag und Bekanntmachung des Hinweises auf die Patenterteilung: **20.07.2016**
(21) Anmeldenummer: 13742643.3
(22) Anmeldetag: 30.07.2013
(51) Int. Cl.: G06F 11/20

(54) **HOCHVERFÜGBARES RECHNERSYSTEM, ARBEITSVERFAHREN UND DESSEN VERWENDUNG**
HIGH-AVAILABILITY COMPUTER SYSTEM, WORKING METHOD AND THE USE THEREOF
SYSTÈME INFORMATIQUE À HAUTE DISPONIBILITÉ, PROCÉDÉ DE FONCTIONNEMENT ET UTILISATION DU SYSTÈME INFORMATIQUE À HAUTE DISPONIBILITÉ

(30) Priorität: 03.08.2012 DE 102012107157; 31.08.2012 DE 102012108117
(43) Veröffentlichungstag der Anmeldung: 10.06.2015
(73) Patentinhaber: Fujitsu Technology Solutions Intellectual Property GmbH, 80807 München (DE)
(72) Erfinder: WINKELSTRÄTER, Bernd, 33102 Paderborn (DE)
(74) Vertreter: Epping - Hermann - Fischer
(86) Internationale Anmeldenummer: PCT/EP2013/066020
(87) Internationale Veröffentlichungsnummer: WO 2014/020032

(56) Entgegenhaltungen:
- EP-A2- 2 254 050
- US-A1- 2008 250 267

## Beschreibung

Die Erfindung betrifft ein hochverfügbares Rechnersystem, umfassend eine Mehrzahl von Rechnerknoten zur parallelen Datenverarbeitung, wobei jeder Rechnerknoten mindestens eine Datenverarbeitungskomponente und einen Arbeitsspeicher aufweist.

Unter hochverfügbaren Rechnersystemen versteht man im Allgemeinen derartige Rechnersysteme, bei denen einige oder sämtliche Komponenten redundant ausgelegt sind, sodass beim Ausfall zumindest einer einzigen Komponente das Rechnersystem insgesamt eine vom einem Benutzer angeforderte Aufgabe weiterhin erledigen kann. Derartige Rechnersysteme werden für besonders wichtige und/oder zeitkritische Aufgaben im Bereich der elektronischen Datenverarbeitung eingesetzt. Hyperclusters sind ein Cluster von Clustern. Aus der US 2008/0250267 A1 sind ein Verfahren und ein System zum koordinierten Failover mehrerer Cluster bekannt. Jeder Cluster hat eine oder mehrere ihm zugeordnete Ressourcengruppen. Unabhängige Knotenausfälle innerhalb der Cluster werden durch plattformspezifische Clustering-Software abgewickelt. Ein Hypercluster-Manager, der auf allen Knoten in einem Cluster ausgeführt wird, kommuniziert mit plattformspezifischer Clustering-Software über etwaige Fehlerbedingungen. Die Verwendung eines regelbasierten Entscheidungssystems bestimmt auf die Knoten anzuwendende Maßnahmen. Ein Plug-in erweitert Austrittspunkte, die für eine nicht-hypercluster Clustering-Technologien definiert sind. Die Fehlerbenachrichtigung wird an andere betroffene Ressourcengruppen in dem Hypercluster übergeben.

Eine mögliche Anwendung von hochverfügbaren Rechnersystemen besteht in der parallelen Datenverarbeitung, wie sie beispielsweise bei so genannten In-Memory-Datenbanken auftritt, also bei Datenbanksystemen, die zumindest einen Großteil der zu verarbeitenden Daten in einem oder mehreren Hauptspeichern des Rechnersystems vorhalten. Solche Datenbanken sind teilweise auch als so genannte hauptspeicherresidente Datenbanken bekannt und zeichnen sich unter anderem dadurch aus, dass die Daten auf die Ablage im Hauptspeicher optimiert sind und nicht, wie bei üblichen Datenbanken unabhängig von der Größe der Daten, auf die Ablage in einem persistenten Speicher, insbesondere einem Festplattenlaufwerk optimiert sind.

Bekannte Anordnungen von Rechnersystemen zur parallelen Datenverarbeitung mit einer Mehrzahl von Rechnerknoten weisen in der Regel wenigstens einen redundanten Rechnerknoten auf, der bei Ausfall eines beliebigen Rechnerknotens die Arbeit des ausgefallenen Rechnerknotens übernehmen kann. Der redundante Rechnerknoten stellt dann im Wesentlichen dieselbe Rechnerleistung wie der ausgefallene Rechnerknoten zur Verfügung, sodass das hochverfügbare Rechnersystem insgesamt aus Sicht eines Benutzers nach wie vor dieselbe Rechenleistung aufweist. Problematisch bei einer derartigen Anordnung, insbesondere bei der Verwendung mit In-Memory-Datenbanken, ist es jedoch, dass durch das Laden der vormals von dem ausgefallenen Rechner verarbeiteten Daten in den Arbeitsspeicher des redundanten Rechnerknotens erhebliche Verzögerungszeiten auftreten können.

Die EP 2 254 050 A2 betrifft ein Verfahren zur effizienteren Nutzung von Computerressourcen, insbesondere bei hochverfügbaren Datenverarbeitungssystemen (DV-Systemen) und Datenbanksystemen, welches einen hohen Datendurchsatz bei niedrigen Kosten ermöglicht. Bei dem Verfahren werden mehr als zwei eigenständige Recheneinheiten über ein Clusternetzwerk zusammengeschaltet. Die Recheneinheiten halten Daten im Arbeitsspeicher, wobei jede Recheneinheit ihre Arbeitsspeicher-Daten über einen XOR Algorithmus auf die anderen Recheneinheiten sichert, wo diese ebenfalls im Arbeitsspeicher abgelegt werden. Das bekannte Verfahren erfordert somit die redundante Speicherung sämtlicher Arbeitsspeicher-Daten auf den anderen Recheneinheiten, was seine Skalierbarkeit bei großen Datenmengen beschränkt.

Es ist eine Aufgabe der vorliegenden Erfindung, die im unabhängigen Anspruch 1 definiert wird, ein hochverfügbares Rechnersystem der eingangs genannten Art zur schnellen und hochverfügbaren Ausführung von so genannten In-Memory-Datenbanken zu beschreiben, dessen Leistungsfähigkeit und Verfügbarkeit weiter verbessert ist. Bevorzugt soll eine Verkürzung der Wartezeit beim Ausfall eines einzelnen Rechners erreicht werden. Des Weiteren sollen geeignete Arbeitsverfahren für derartige Rechnersysteme beschrieben werden.

Gemäß einem ersten Aspekt der vorliegenden Erfindung wird ein hochverfügbares Rechnersystem beschrieben, das dazu eingerichtet ist, eine parallel arbeitende Datenbank bereitzustellen, deren Daten in eine Mehrzahl von unabhängig abfragbaren Datenbanksegmenten aufgeteilt ist. Das Rechnersystem umfasst eine Mehrzahl von Rechnerknoten zur parallelen Datenverarbeitung, wobei jeder Rechnerknoten mindestens eine Datenverarbeitungskomponente und einen Arbeitsspeicher aufweist. Das hochverfügbare Rechnersystem umfasst des Weiteren eine Mehrzahl von Speicherknoten, wobei jeder Speicherknoten mindestens einen nichtflüchtigen Massenspeicher aufweist, und wenigstens ein Datennetzwerk zum Zugriff auf die Mehrzahl von Rechnerknoten. Dabei ist die Mehrzahl von Rechnerknoten in eine Mehrzahl von Rechnergruppen partitioniert, wobei jede der Mehrzahl von Rechnergruppen wenigstens einen redundanten Rechnerknoten aufweist. Jeder Speicherknoten der Mehrzahl von Speicherknoten ist genau einer Rechnergruppe der Mehrzahl von Rechnergruppen zugeordnet, und jede Rechnergruppe weist eine der jeweiligen Rechnergruppe zugeordnete, lokale Verbindungsstruktur auf, welche die der jeweiligen Rechnergruppe zugeordneten Speicherknoten mit den Rechnerknoten der jeweiligen Rechnergruppe verbindet. Dabei ist im Betrieb des Rechnersystems jedes Datenbanksegment einem Rechnerknoten der Mehrzahl von Rechnerknoten zugeordnet und in dem Datenspeicher des zugeordneten Rechnerknotens gespeichert.

Durch die Aufteilung einer Mehrzahl von Rechnerknoten in eine Mehrzahl von Rechnergruppen mit jeweils wenigstens einem redundanten Rechnerknoten in Verbindung mit einer jeder Rechnergruppe zugeordneten, lokalen Verbindungsstruktur und mindestens einem der Rechnergruppe zugeordneten Speicherknoten, kann die Datenübertragungsrate zwischen den Speicherknoten und den damit verbundenen Rechnerknoten erhöht werden. Insbesondere wird es ermöglicht, Daten eines ausgefallenen Rechnerknotens von einem lokal mit einem redundanten Rechnerknoten verbundenen Speicherknoten zu laden, sodass der redundante Speicherknoten schneller als in bekannten Architekturen mit einer zentralen Speichervorrichtung einsatzbereit ist, um den ausgefallenen Rechnerknoten zu ersetzen.

Ein weiterer Vorteil besteht darin, dass bei einem Starten des Rechnersystems eine Vielzahl von unabhängigen Speicherknoten und je Gruppe voneinander gesonderten Verbindungsstrukturen zum Laden von Daten eingesetzt werden können.

Schließlich wird jegliches dauerhaftes Sichern und Wiederherstellen von Daten aus dem Hauptspeicher einer der Rechnerknoten in dem lokalen Speicherknoten beschleunigt, was insbesondere bei kombiniertes Online Analytical Processing (OLAP) und Online Transaction Processing (OLTP) von Vorteil ist.

Im Effekt werden bei vergleichbarer Zahl von Rechnerknoten durch die beschriebene Aufteilung ein geringerer Verzweigungsgrad, auch bekannt als "fan-out", und kürzerer Leitungswege als bei bekannten Systemen ermöglicht. In Folge dessen treten in der lokalen, voneinander getrennten Verbindungsstruktur weniger nachteilige Effekte, wie beispielsweise eine Signalverzögerung oder Verzerrung auf einzelnen Datenleitungen oder ein Versatz von Signalen einer Mehrzahl paralleler Datenleitungen oder Datenpfade auf, im Englischen auch als "skew" bezeichnet. Auch beim Einsatz optischer Verbindungsstrukturen ist die Verkürzung der lokalen Verbindungsstrukturen vorteilhaft, da es dann nicht oder nur zu einer sehr geringen Dispersion verschiedener zur Datenübertragung parallel genutzter Wellenlängen kommt.

Ein derartiges Rechnersystem eignet sich insbesondere zur Implementierung von In-Memory-Datenbanken, wie sie insbesondere beim Data Mining und anderen Hochleistungs-Datenbankanwendungen Verwendung finden. Durch die Segmentierung der Daten der Datenbank in unabhängig voneinander abfragbare Datenbanksegmente wird unter anderem deren Speicherung in lokal mit den Rechnerknoten einer Rechnergruppe verbundenen Speicherknoten ermöglicht. Durch die Parallelisierung und lokale Speicherung wird die Zugriffszeit auf die gespeicherten Daten reduziert und somit die Reaktionszeit und der mögliche Datendurchsatz sowohl Normalbetrieb als auch beim Ausfall eines einzelnen Knoten (englisch: "failover") des Datenbanksystems insgesamt erhöht.

Gemäß einer vorteilhaften Ausgestaltung ist wenigstens einer ersten Rechnergruppe mit einer ersten Anzahl Rechnerknoten eine zweite Anzahl von Datenbanksegmenten zugeordnet, wobei die zweite Anzahl kleiner ist als die erste Anzahl und wobei die der zweiten Anzahl von Datenbanksegmenten zugeordneten Daten der Datenbank auf den der ersten Rechnergruppe zugeordneten Speicherknoten persistent gespeichert sind. Sofern in einer Rechnergruppe mehr Rechnerknoten als zu verarbeitende Datenbanksegmente zugeordnet sind, ist gewährleistet, dass zumindest ein Rechnerknoten als redundanter Ersatzknoten zur Abfrage eines der Rechnergruppe zugeordneten Datenbanksegments zur Verfügung steht.

Gemäß einer weiteren vorteilhaften Ausgestaltung ist jeder Rechnerknoten der ersten Rechnergruppe dazu eingerichtet, Datenbankänderungen auf wenigstens einem der ersten Rechnergruppe zugeordneten Speicherknoten persistent zu speichern, sodass beim Ausfall eines ersten Rechnerknotens der ersten Rechnergruppe der zumindest eine redundante Rechnerknoten der ersten Rechnergruppe durch Laden der Daten des dem ersten Rechnerknoten zugeordneten Datenbanksegments und/oder der Datenbankänderungen des ersten Rechnerknotens von einem lokal mit dem redundanten Rechnerknoten verbundenen Speicherknoten die Aufgaben des ausgefallenen ersten Rechnerknotens übernehmen kann. Durch das Laden von Datenbanksegmenten oder Datenbankänderungen von einem mit dem redundanten Rechnerknoten lokal verbundenen Speicherknoten kann die Übernahmezeit zwischen dem Ausfall des ersten Rechnerknotens und der Übernahme seiner Aufgaben durch den redundanten Rechnerknoten verkürzt werden.

Gemäß einer vorteilhaften Ausgestaltung handelt es sich bei der wenigstens einen lokalen Verbindungsstruktur um eine parallele Switching Fabric zum selektiven Verbinden der Rechnerknoten der ersten Rechnergruppe mit den der ersten Rechnergruppe zugeordneten Speicherknoten über eine Mehrzahl von zueinander parallelen Verbindungspfaden. Eine so genannte parallele Netzwerk-Fabric oder auch Switching Fabric weist gegenüber anderen Verbindungs-Topologien, wie insbesondere lokalen Netzwerken gemäß dem Ethernet-Standard, erhebliche Performance-Vorteile auf und gestattet unter anderem die Herstellung mehrerer zueinander paralleler Verbindungen.

Gemäß einer weiteren vorteilhaften Ausgestaltung ist wenigstens ein erster Rechnerknoten wenigstens einer ersten Rechnergruppe in einer ersten Baugruppe eines Serversystems, beispielsweise eines Blade- oder Rack-Serversystems, angeordnet, und ein der ersten Rechnergruppe zugeordneter erster Speicherknoten ist in einer zweiten Baugruppe des Serversystems angeordnet. Der erste Rechnerknoten und der erste Speicherknoten sind über wenigstens eine Direct Attached Storage (DAS) Verbindung miteinander verbunden. Die räumlich benachbarte Anordnung von Komponenten des hochverfügbaren Rechnersystems, beispielsweise in üblichen 19"-Rackgehäusen eingeschraubte Rackserver und Speichervorrichtungen eines gemeinsamen Rack-Serversystems, erlaubt den Einsatz von so genannten DAS-Verbindungen mit verhältnismäßig kurzen Leitungswegen, die gegenüber allgemeinen Netzwerkverbindungen erhöhte Datenübertragungsrate, reduzierte Latenzzeit und ggf. eine größere Anzahl von parallelen Verbindungen gestatten.

Bei der DAS-Verbindung handelt es sich beispielsweise um eine Datenverbindung gemäß dem Small Computer System Interface (SCSI) und/oder dem PCI-Express-Standard (PCIe), insbesondere gemäß dem Serial Attached SCSI (SAS) und/oder dem SCSI over PCIe (SOP) Standard.

Gemäß einer alternativen Ausgestaltung ist ein erster Rechnerknoten wenigstens einer ersten Rechnergruppe und wenigstens ein der ersten Rechnergruppe zugeordneter erster Speicherknoten über wenigstens eine seriell codierte Hochgeschwindigkeitsleitung, insbesondere gemäß dem InfiniBand-Standard, miteinander verbunden. Auch der so genannte InfiniBand-Standard oder technisch ähnliche seriell kodierte Hochgeschwindigkeitsleitungen erlauben die Anbindung eines Speicherknotens an eine oder mehrere Rechnerknoten mit einer besonders hohen Geschwindigkeit von beispielsweise 2,5, 5, 10, 20 oder mehr GBits/s. Trotz der bezüglich eines gemeinsamen Taktsignals seriellen Kodierung kann eine derartige Verbindung gegebenenfalls eine Mehrzahl von zueinander parallelen Datenleitungen aufweisen.

Gemäß einer weiteren vorteilhaften Ausgestaltung sind wenigstens zwei Rechnerknoten einer ersten Rechnergruppe über die der Rechnergruppe zugeordnete lokale Verbindungsstruktur derart miteinander verbunden, dass der erste Rechnerknoten gemäß einem Remote Direct Memory Access (RDMA) Protokoll direkt auf den Inhalt des Arbeitsspeichers des zweiten Rechnerknotens zugreifen kann. Der Einsatz von Verbindungen gemäß RDMA-Protokollen, wie beispielsweise dem sogenannten InifiniBand Verbs Layer, dem Internet Wide Area RDMA Protocol (iWARP), dem RDMA over Converged Ethernet (RoCE) und anderen RDMA-Standards, wie sie beispielsweise auf http://www.openfabrics.org beschrieben sind, ermöglicht die noch schnellere Übernahme von Daten eines Rechners auf einen redundanten Rechnerknoten, sofern der Speicher des ersten Rechnerknotens noch angesprochen werden kann. Eine derartige Ausgestaltung eignet sich unter anderem für solch hochverfügbare Rechnersysteme, bei denen jeder Rechnerknoten einen eingebauten nichtflüchtigen Massenspeicher als Speicherknoten aufweist.

Gemäß einer weiteren vorteilhaften Ausgestaltung weist wenigstens ein erster Speicherknoten einen Controller mit einer Mehrzahl von Zugriffs-Ports zum gleichzeitigen Anschluss an einer Mehrzahl von Rechnerknoten der dem Speicherknoten zugeordneten Rechnergruppe auf. Alternativ oder zusätzlich weist ein erster Rechnerknoten einer Rechnergruppe einen Host Bus Adapter mit einer Mehrzahl von Zugriffs-Ports zum gleichzeitigen Anschluss an eine Mehrzahl von der Rechnergruppe zugeordneten Speicherknoten auf. Eine derartige Rechner- bzw. Speicherknotenkonfiguration eignet sich zur Herstellung einer Mehrzahl von direkten Verbindungen zwischen einer Gruppe einander zugeordneter Rechner- und Speicherknoten.

Die Leistungsfähigkeit des hochverfügbaren Rechnersystems kann weiter verbessert werden, wenn wenigstens ein erster Speicherknoten wenigstens ein Halbleiter-Massenspeichergerät aufweist. Insbesondere bei der Verwendung von Halbleiter-Massenspeichergeräten als nichtflüchtige Massenspeicher der Speicherknoten reichen die von bekannten Netzwerktechnologien und -topologien bekannten Datenübertragungsraten beim gleichzeitigen Anschluss einer Vielzahl von Rechnerknoten in der Regel nicht aus, um eine maximale Datenübertragungsrate des Speichermediums auszunutzen. Durch die erfindungsgemäße Aufteilung des Rechnersystems in mehrere, teilweise voneinander unabhängige Rechnergruppen mit voneinander unabhängigen, lokalen Verbindungsstrukturen, kann dagegen die Datenübertragungsrate, wie sie Halbleiter-Massenspeichergeräte zur Verfügung stellen, mit bekannten Technologien ganz oder weitgehend ausgereizt werden.

Gemäß einem zweiten Aspekt der Erfindung wird ein hochverfügbares Rechnersystem gemäß dem ersten Aspekt in einer so genannten On-Line Analytical Processing (OLAP) oder On-Line Transaction Processing (OLTP) Datenbank Appliance oder einer In-Memory Datenbank Appliance.

Derartige Appliances, also Geräte, in denen Hardware und Software besonders gut aufeinander abgestimmt sind, erlauben die Ausführung von besonders leistungsfähigen Datenbankanwendungen, wie sie beispielsweise zum Data Mining oder für hochgradig parallel abfragbare Datenbanken in Kommunikationsnetzwerken und -vorrichtungen geeignet sind.

Weitere vorteilhafte Ausgestaltungen der Erfindung sind in den angehängten Patentansprüchen sowie der nachfolgenden, ausführlichen Beschreibung von Ausführungsbeispielen offenbart.

Die Erfindung wird nachfolgend anhand von Ausführungsbeispielen unter Bezugnahme auf die angehängten Figuren im Detail beschrieben. Dabei werden gleiche oder gleichartige Komponenten mit gleichen Bezugszeichen versehen. Zur besseren Unterscheidbarkeit werden unterschiedliche Instanzen gleicher oder gleichartiger Komponenten mit einem alphabetischen Suffix versehen, der bei Bezugnahme auf sämtliche Instanzen der jeweiligen Komponente in der Beschreibung weggelassen wird.

In den angehängten Figuren zeigen:
- Figur 1: eine schematische Darstellung eines hochverfügbaren Rechnersystems,
- Figur 2: eine erste Ausgestaltung eines hochverfügbaren Rechnersystems,
- Figur 3: eine zweite Ausgestaltung eines hochverfügbaren Rechnersystems,
- Figur 4: eine dritte Ausgestaltung eines hochverfügbaren Rechnersystems,
- Figur 5: ein Ablaufdiagramm eines Verfahrens zum Initialisieren eines hochverfügbaren Rechnersystems und
- Figur 6: ein Ablaufdiagramm eines Betriebsverfahrens für ein hochverfügbares Rechnersystem.

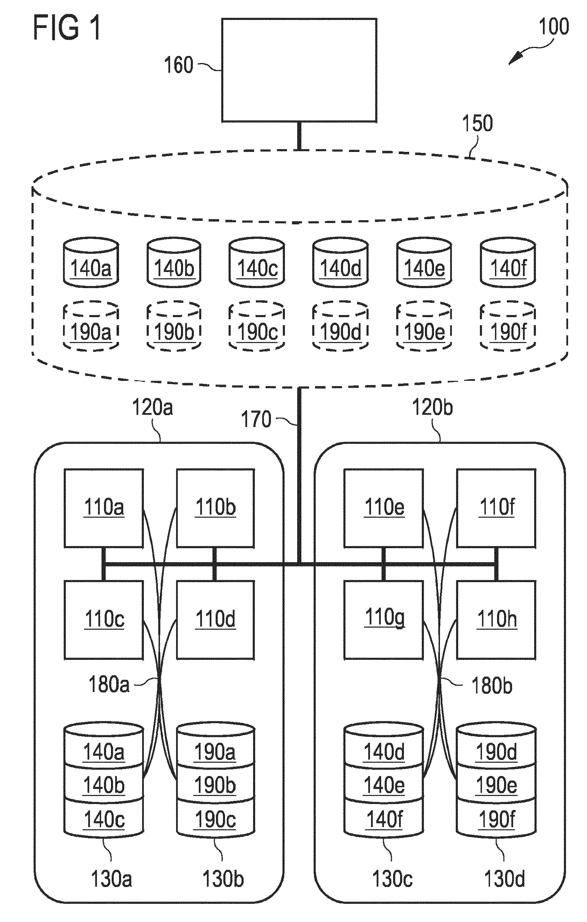

Figur 1 zeigt schematisch ein hochverfügbares Rechnersystem 100. Das Rechnersystem 100 umfasst eine Mehrzahl von Rechnerknoten 110a bis 110h, die im dargestellten Ausführungsbeispiel in zwei Rechnergruppen 120a bzw. 120b partitioniert sind.

Unter einer Partitionierung wird im Folgenden die überlappungsfreie Aufteilung der Gesamtmenge der Rechnerknoten 110 in Untergruppen verstanden. Anstelle der in der Figur 1 dargestellten Aufteilung von acht Rechnerknoten 110 in zwei Gruppen 120 mit jeweils vier Rechnerknoten 110 wäre beispielsweise auch eine Aufteilung in vier Rechnergruppen 120 mit jeweils zwei Rechnerknoten 110 oder eine Aufteilung in zwei Rechnergruppen mit je drei Rechnerknoten 110 und eine dritte Rechnergruppe 120 mit zwei Rechnerknoten 110 vorstellbar. Grundsätzlich wäre selbstverständlich auch eine Aufteilung vorstellbar, bei der Rechnerknoten 110, die für eine aktuelle Datenverarbeitungsanforderung nicht benötigt werden, keiner der Rechnergruppen 120 zugeordnet sind.

Die in der Figur 1 dargestellten Rechnergruppen 120a und 120b umfassen des Weiteren jeweils zwei Speicherknoten 130a und 130b bzw. 130c und 130d. Bei den Speicherknoten 130 handelt es sich beispielsweise um lokal mit den Rechnerknoten 110 verbundene so genannte Direct Attached Storage (DAS) Geräte. Im beschriebenen Ausführungsbeispiel handelt es sich bei den Speicherknoten 130a und 130c jeweils um eine Rack-Baugruppe mit einer Mehrzahl von magnetischen Massenspeicherlaufwerken in der Form von Festplatten. Bei den Speicherknoten 130b und 130d handelt es sich dagegen um Rack-Baugruppen mit einer Mehrzahl von nichtflüchtigen Halbleiter-Massenspeichergeräten, also so genannten Solid State Disks (SSD). Alternativ können die Speicherknoten 130a bis 130d auch jeweils nur magnetische Massenspeicherlaufwerke in der Form von Festplatten, nichtflüchtige Halbleiter-Massenspeichergeräte oder hybride Massenspeichergeräte umfassen.

Der jeweils erste Speicherknoten 130a und 130c der ersten Gruppe 120a bzw. zweiten Gruppe 120b dienen zum Speichern von Datenbanksegmenten 140a bis 140c bzw. 140d bis 140f, die, zumindest logisch gesehen, zusammengenommen eine Datenbank 150 bilden. Die Datenbank 150 ist in der Darstellung gemäß Figur 1 gestrichelt dargestellt, da die darin gespeicherten Daten in ihrer Gesamtheit in keinem der in der Figur 1 dargestellten Speicherknoten 130a bis 130d gespeichert ist. Dennoch ergibt sich aus der Kombination der einzelnen Datenbanksegmente 140a bis 140f eine für einen Benutzer einheitlich abfragbare Datenbank 150. Tatsächlich handelt es sich bei der Kombination der Datenbanksegmenten 140a bis 140f bevorzugt um einen Speicherauszug (englisch: "snapshot") der aktiven Rechnerknoten 110, der beispielsweise alle fünf Minuten angefertigt wird. Aus Gründen der Betriebssicherheit werden in der Regel mehreren Versionen vorgehalten. Zusammen mit Informationen für ein so genanntes "Roll forward" der in der Figur 1 gestrichelt dargestellten und später beschriebenen Logfiles 190 ergeben diese die aktuelle Datenbank 150. Selbstverständlich ist auch eine teilweise oder vollständig Überlappende Speicherung von Datenbanksegmenten 140 in einigen oder allen Speicherknoten 130 möglich. Hierdurch kann insbesondere eine Redundanz beim Ausfall eines oder mehrerer Speicherknoten 130 hergestellt werden. Ebenfalls kann der Inhalt von Teilen oder der gesamten Datenbank 150 in einem in der Figur 1 nicht dargestellten, externen Massenspeichersystem gespeichert werden.

Die in der Figur 1 dargestellte Datenbank 150 kann von einem oder mehreren Client-Rechnern 160 abgefragt werden. Dazu ist der in der Figur 1 dargestellte Client-Rechner 160 über ein Datennetzwerk 170 mit den einzelnen Rechnerknoten 110 verbunden. Typischerweise erfolgt die Aufteilung einer Anfrage auf die einzelnen Rechnerknoten 110 durch eine oder mehrere zentrale Managementkomponenten. Diese sind aus Gründen der Übersicht in der Figur 1 jedoch nicht dargestellt. Aus logischer Sicht schickt der Client-Rechner 160 seine Abfragen somit parallel an sämtliche Rechnerknoten 110 der beiden Rechnergruppen 120a und 120b, wobei jeder Rechnerknoten 110 jeweils nur eine Teilabfrage bezüglich des ihm zugeordneten Datenbanksegments 140 bearbeitet.

Zum Laden von Daten in den Hauptspeicher und ggf. zur nachfolgenden Bearbeitung der Teilabfragen sind die vier Rechnerknoten 110a bis 110d der ersten Rechnergruppe 120a über eine so genannte Switching Fabric 180 jeweils direkt mit den zwei Speicherknoten 130a und 130b verbunden. In äquivalenter Weise sind die Rechnerknoten 110e bis 110h der zweiten Rechnergruppe 120b über eine Switching Fabric 180b mit den Speicherknoten 130c und 130d verbunden.

In der in der Figur 1 dargestellten Konfiguration bearbeiten die Rechnerknoten 110a bis 110c der ersten Rechnergruppe 120a jeweils ein Datensegment 140a bis 140c. Die Rechnerknoten 110e bis 110g bearbeiten jeweils Datenbankanfragen bezüglich der Datenbanksegmente 140d bis 140f. Der jeweils vierte Rechnerknoten 110d bzw. 110h wird als redundante Ersatzrechnerknoten für die erste Rechnergruppe 120a bzw. die zweite Rechnergruppe 120b bereit gehalten. Da jeder der Rechnerknoten 110a bis 110c sowie 110e bis 110g das von ihm zu verarbeitende Datenbanksegment 140a bis 140c bzw. 140d bis 140f über die Switching Fabric 180a bzw. 180b aus dem lokalen Speicherknoten 130a bzw. 130c abrufen kann, wird gegenüber der Verwendung eines gemeinsamen Speichers, beispielsweise eine zentralen NAS-Systems, und/oder einer gemeinsamen Verbindungsstruktur, beispielsweise eines lokalen Ethernet-Netzwerks, für alle Rechnerknoten 110 die erreichbare Datenübertragungsrate erhöht und die erreichbare Latenzzeit reduziert.

Die Switching Fabrics 180 verbinden die Rechnerknoten 110 mit den lokalen Speicherknoten 130 über verhältnismäßig kurze Leitungswege. Dabei kann es sich beispielsweise um Kabelverbindungen innerhalb einer Rackservers mit eingebautem Massenspeicher, um die Leiterbahner einer Midplane innerhalb eines Blade-Systems oder um Kabel- oder Backplaneverbindungen innerhalb eines oder zu einem räumlich benachbart aufgestellten, üblichen 19"-Racksystems handeln. Typischerweise sind diese Leitungswege kürzer als 25 m, bevorzugt kürzer als 2 m, noch bevorzugter sogar kürzer als 1 m, noch bevorzugt sogar kürzer als 50 cm. Durch die kurzen Leitungswege treten darin kaum nennenswerte Signalverzögerungen, Latenzzeiten, Reflexionen oder Verzerrungen auf, so dass selbst bei ansonsten unveränderter Übertragungstechnik in der Regel eine höhere Übertragungsbandbreite erzielt werden kann als dies bei Verbindungen über größere Entfernungen, beispielsweise von einem ersten Racksystem mit einer Vielzahl von Rechnerknoten 110 zu einem zweiten Racksystem mit einer Vielzahl von Speicherknoten 130, erzielt werden kann.

Durch die kurzen Verbindungswege innerhalb der Switching Fabrics 180a bzw. 180b können besonders hohe Datenübertragungsraten erreicht werden. Sind die einzelnen Rechnerknoten 110 beispielsweise über ein lokales Netzwerk auf Grundlage des Ethernet-Protokollfamilie IEEE 802.3x mit einer Bruttobandbreite von einem oder zehn GBit/s verbunden, können die Verbindungen zwischen den Rechnerknoten 110 einer Gruppe 120 und den Speicherknoten 130 deutlich schneller, beispielsweise mit einer SAS-, PCIe-, InfiniBand- oder Fibre-Channel-Verbindung mit einer Bruttobandbreite von 16 GBit/s oder 32 GBit/s oder mehr verbunden werden. Dabei ist der Unterschied zwischen den jeweiligen Nettobandbreiten relativ noch größer, da eine dedizierte Speicherverbindung in der Regel einen geringeren Protokoll-Overhead erfordert als ein allgemeines Netzwerkprotokoll wie IEEE 802.3xx oder TCP/IP.

Somit ist die Netto- und/oder Bruttobandbreite der Verbindung zwischen den Rechnerknoten 110 einer Gruppe 120 größer als die Netto- bzw. Bruttobandbreite einer Verbindung von Rechnerknoten 110 unterschiedlicher Gruppen 120a und 120b. Bevorzugt ist die Bandbreite der Speicherverbindung innerhalb einer Gruppe 120 um den Faktor Zwei, noch bevorzugter um den Faktor Vier größer als die Bandbreite der Verbindungen zwischen den Gruppen 120.

Unter der Bandbreite wird hier bevorzugt die sogenannte Bisektionsbandbreite (englisch: "bi-sectional bandwidth"), also die Bandbreite einer Verbindung zwischen zwei Teilen eines vernetzten Gesamtsystem verstanden. Im Sinne dieser Definition ist die Bisektionsbandbreite bei einer Teilung des Rechnersystems 100 innerhalb einer Gruppe 120, beispielsweise zwischen den Rechnerknoten 110a und 110c einerseits und den Rechnerknoten 110b und 110d andererseits, größer als die Bisektionsbandbreite bei einer Teilung des Rechnersystems 100 zwischen zwei Gruppen 120, also beispielsweise zwischen den Rechnerknoten 110a bis 110d einerseits und den Rechnerknoten 110e bis 110h andererseits. Zwar könnte grundsätzlich auch ein Knoten 110 der zweiten Gruppe 120b die Aufgaben eines ausgefallen Rechnerknoten 110 der ersten Gruppe 120a übernehmen, wegen der geringeren Bisektionsbandbreite würde dies gegenüber einer Übernahme durch einen Rechnerknoten 110 der ersten Gruppe 120a jedoch einen erheblichen Leistungsverlust des Rechnersystems 100 insgesamt nach sich ziehen.

Im Sinne der obigen Beschreibung wird unter der Bandbreite dabei die Übertragungsbandbreite für eine einzelne, streng geordnete Verbindung betrachtet, also eine Verbindung bei der die Abfolge einer Paket- oder Anfragesequenz des Senders auf Seiten des Empfängers stets gewahrt bleibt. Beispiele solcher streng geordneten Verbindungen sind beispielsweise PCI-Express-Verbindungen mit mehreren parallelen Datenleiten, beispielsweise eine x16 PCIe-Verbindung mit 16 parallelen, elektrisch-differenziellen Datenleitungen je Übertragungsrichtung, also je einmal zum Senden und zum Empfangen (englisch: "dual-simplex"), bei denen einzelne Bits oder Bytes einer Netzwerkanfrage ohne Verlust der Ordnung auf die einzelnen Datenleitungen verteilt werden (englisch: "striping"). Anstelle elektrischer Datenleitungen können selbstverständlich auch optische Verbindungen, insbesondere Lichtleiterverbindungen mit mehreren, mittels Wellenlängenmultiplexverfahren (englisch: "Wavelength Division Multiplexing - WDM") physikalisch voneinander unabhängigen Übertragungsfrequenzen bzw. Trägerwellenlängen, Verwendung finden. Insbesondere unterscheidet eine derartige streng geordnete parallele Verbindung sich somit von dem bloßen Parallelschalten mehrerer physikalisch unabhängiger Verbindungen, die ohne zusätzlichen Protokoll- oder sonstigem Verwaltungsaufwand zu einem Verlust der strengen Ordnung führen können. Ein Beispiel einer derartigen ungeordneten Verbindungsanordnung wäre das Zusammenschalten (englisch: "trunking") von mehreren Gigabit-Ethernet-Verbindungen.

Somit gestattet der niedrigere Verzweigungsgrad innerhalb der Gruppen 120 auch eine Erhöhung der Parallelität der einzelnen Verbindungen. Dies wird zum einen durch die kurzen Verbindungswege selbst erreicht, da Probleme wie ein Verlust einer Synchronisation parallel übertragener elektrischer Signale oder Dispersion per optischer Übertragung mittels unterschiedlicher Trägerwellenlängen, die durch unterschiedliche Laufzeiten von Signalen, die über unabhängige Übertragungspfade übertragen werden, erst gar nicht auftreten. Bevorzugt beträgt der Grad der Parallelität der Verbindungen innerhalb einer Gruppe vier oder mehr.

Darüber hinaus wird auch die Implementierung der erforderlichen Verbindungsstruktur selbst, insbesondere von Switching-Elementen stark vereinfacht oder erst ermöglicht. Beispielsweise weisen derzeit am Markt erhältliche PCI-Express Switching-Bausteine eine fest vorgegebene Anzahl, zum Beispiel 96, von schaltbaren Anschlüssen für je eine so genannte PCI-Express-Lane, also eine einzelne Datenleitung, auf. Würden die 96 Anschlüsse zum Verbinden von 80 Rechnerknoten 110 mit einem über x16 PCIe über 16 Anschlüsse im Uplink angebunden Speicherknoten 130 eingesetzt, stünde lediglich ein einzelner Anschluss (entsprechend einem Downlink mittels x1 PCIe) je Rechnerknoten 110 zur Verfügung. Bei Aufteilung der Rechnerknoten 110 in Gruppen 120 mit jeweils fünf Rechnerknoten 110 stehen innerhalb einer Gruppe 120 dagegen jeweils 16 Anschlüsse je Rechnerknoten 110 zur Verfügung (entsprechend x16 PCIe). Bevorzugt ist der Parallelisierungsgrad je Verbindung größer als zwei, noch bevorzugter größer als vier, noch bevorzugter sogar größer als der Verzweigungsgrad, also die Größe der Gruppe 120.

Zwar erscheint grundsätzlich auch die Verwendung einer Vielzahl von Switching-Bausteinen möglich, um einen vergleichbaren Grad der Parallelisierung zu erreichen. Dies ist praktisch jedoch oft unmöglich, da die zur vollständigen parallelen Verbindung erforderliche Anzahl der Datenleitungen proportional mit der Anzahl der Rechnerknoten 110 und dem Grad der Parallelisierung anstiege. Der auf einer Back- oder Midplane eines Rechnersystems 100 oder im Verkabelungsbereich eines Racksystems zur Verfügung stehende Platz reicht jedoch nicht aus, um ausreichend viele Datenleitungen für einen wünschenswerten Grad der Parallelisierung von beispielsweise vier oder mehr Datenleitungen je Rechnerknoten 110 für eine Vielzahl von Rechnerknoten, beispielsweise mehr als 20 Rechnerknoten 110, anzuordnen. Zudem steigen die Kosten für die zur Herstellung einer Vielzahl von Verbindungen mit einem hohen Parallelisierungsgrad überproportional an.

Um die Verarbeitung noch weiter zu beschleunigen, halten die Rechnerknoten 110 das jeweils von ihnen verarbeitete Datenbanksegment 140 komplett in ihrem Arbeitsspeicher, beispielsweise einem dynamischen, flüchtigen Halbleiterspeicher, vor. Auf diese Weise sind bei der Beantwortung von Datenbankabfragen in der Regel überhaupt keine Zugriffe auf einen der Speicherknoten 130 erforderlich. Außerdem erlaubt der wahlfreie Zugriff auf den Inhalt des Hauptspeichers neben der von festplattenbasierten Datenbanksystem bekannten zeilenorientierten Verarbeitung zusätzlich oder alternativ eine spaltenorientierte Verarbeitung der Daten der Datenbank 150, was in Abhängigkeit der zu lösenden Aufgabe oftmals eine effizientere Darstellung im Speicher, insbesondere durch Kompression, ermöglicht und damit eine weitere Erhöhung der Verarbeitungsgeschwindigkeit gestattet.

Fällt einer der Rechnerknoten 110 aus, beispielsweise der Rechnerknoten 110a der ersten Rechnergruppe 120a, übernimmt der redundante Rechnerknoten der jeweiligen Rechnergruppe 120, im beschriebenen Fall also der Rechnerknoten 110d der Rechnergruppe 120a, die Aufgabe des zuvor ausgefallenen Rechnerknotens 110. Zu diesem Zweck lädt der Rechnerknoten 110d das Datenbanksegment 140a in seinen Hauptspeicher und übernimmt die Abarbeitung einer eventuell laufenden oder nachfolgenden Benutzeranfrage. Da der redundante Knoten 110d in derselben Rechnergruppe 120 angeordnet ist wie der ausgefallene Rechnerknoten 110a, kann auch der Rechnerknoten 110d mit derselben Geschwindigkeit wie der erste Rechnerknoten 110a auf den lokalen Speicherknoten 130a zugreifen.

Um eventuell bereits von dem Rechnerknoten 110a vorgenommene Teilergebnisse übernehmen oder sonstige Zustandsinformationen von dem ausgefallenen Rechnersystem 110a auf den redundanten Rechnerknoten 110d übertragen zu können, speichern sämtliche Rechnerknoten 110 einer Rechnergruppe 120 aktuelle Speicherauszüge (englisch: "memory snapshots"), Zustands- und/oder Transaktionsdaten oder sonstige Datenbankänderungen in einem so genannten Logfile oder einer anderen geeigneten Datenstruktur. Aus Performance-Gründen ist in der Ausgestaltung gemäß Figur 1 das Logfile für die drei Datenbanksegmente 140a bis 140c in korrespondierenden Logfiles 190a bis 190c des zweiten Speicherknotens 130b gespeichert. Da der zweite Speicherknoten 130b, wie oben beschrieben, nichtflüchtige Halbleiter-Massenspeichergeräte als Speichermedium einsetzt, sind die über die Switching Fabric 180 erzielbaren Datenübertragungsraten und Datenzugriffszeiten für den zweiten Speicherknoten 130b noch besser als die des ersten Speicherknotens 130a. Dementsprechend kann beim Ausfall des ersten Rechnerknotens 110a der redundante Rechnerknoten 110d besonders schnell in einen äquivalenten Betriebszustand gebracht werden, den der Rechnerknoten 110a vor dem Ausfall innehatte.

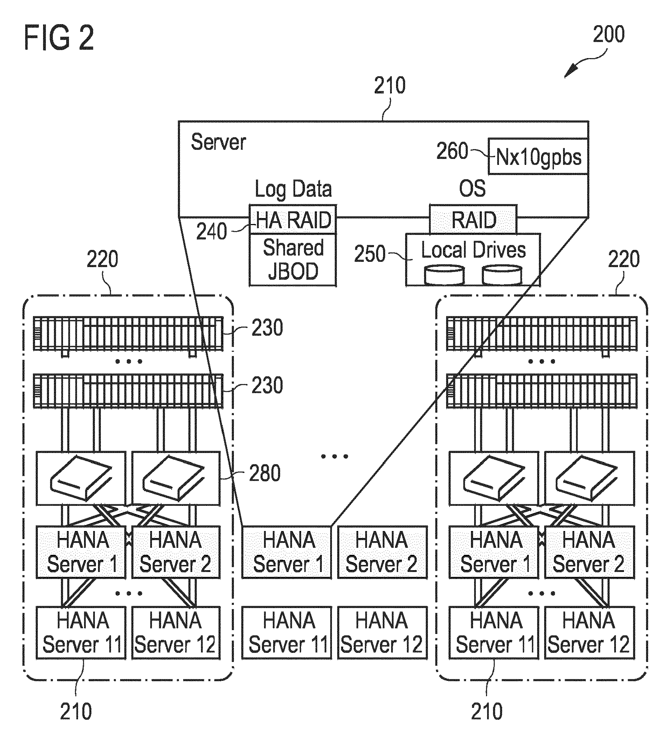

Figur 2 zeigt eine konkrete Konfiguration für ein hochverfügbares Rechnersystem 200 gemäß einem ersten Ausführungsbeispiel. In dem dargestellten Ausführungsbeispiel umfassen eine Mehrzahl von Rechnergruppen jeweils zwölf so genannte HANA-Server 210, von denen in der Figur 2 aus Gründen der Übersichtlichkeit jedoch jeweils nur vier HANA-Server 210 dargestellt sind. Als HANA-Server 210 wird dabei ein Rechnerknoten zum Einsatz in der sogenannten "High Performance Analytic Appliance" gemäß der Datenbanktechnologie der SAP AG bezeichnet. Zusammen bilden die jeweils zwölf HANA-Server 210 jeweils eine in sich redundante sogenannte Failover Gruppe 220.

Die HANA-Server 210 einer Failover Gruppe 220 sind über jeweils zwei zueinander redundante SAS Switches 280 redundant mit jeweils zwei Speichereinrichtungen 230 verbunden. Die Verbindungsbandbreite bzw. die Parallelität der einzelnen Verbindungen zwischen den SAS Switches 280 und den Speichereinrichtungen 230 sollte bevorzugt mit der Größe der Failover Gruppe 220 ansteigen und an diese angepasst sein, so dass ein an den SAS Switch 280 angeschlossener HANA Server 210 nach Möglichkeit seine gesamte Kommunikationsbandbreite ausnutzen kann. In den zwei Speichereinrichtungen 230 sind jeweils vier so genannte zweifach gehostete Speichersysteme in einer so genannten JBOD-Konfiguration (englisch: "Just a Bunch Of Disks") zum Speichern von Datenbanksegmenten 140 bzw. Logfiles 190 enthalten. Die Speicherkapazität der Speichereinrichtungen 230 ist blockweise zum schnellen Zugriff auf die darin enthaltenen Daten orientiert. Jedes der in den Speichereinrichtungen 230 verwendeten lokalen Speichersysteme besitzt zwei Ports zum Anschluss der jeweiligen Massenspeicher an die zwei Switches 280. Jeder HANA-Server 210 umfasst einen Host Adapter 240 zum wahlfreien mittelbaren Zugriff auf die Speichereinrichtungen 230 über einen der Switches 280. Auf diese Weise kann der Ausfall eines beliebigen HANA-Servers 210 oder eines der Switches 280 innerhalb der Failover Gruppe 220 abgefangen werden. In dem beschriebenen Ausführungsbeispiel sind auch die Daten selbst redundant in den zwei Speichereinrichtungen 230 abgelegt.

Darüber hinaus umfasst jeder der HANA-Server 210 ein oder mehrere lokale Massenspeicher 250 zum Speichern eines Betriebssystems für den HANA-Server 210. Gegebenenfalls können in dem lokalen Massenspeicher auch Speicherauszügen eines in dem Hauptspeicher gespeicherten Datenbanksegments gespeichert sein. Schließlich weist der HANA-Server 210 ein oder mehrere Netzwerkschnittstellen 260 zum Anschluss der HANA-Server 210 an ein Datennetzwerk 170 zum Empfangen von Benutzeranfragen und Rücksenden von Ergebnissen sowie ggf. für weitere Steueraufgaben auf.

In der Konfiguration gemäß Figur 2 ist die Anzahl der Rechnerknoten in der Form von HANA-Servern 210 bzw. der Anzahl von Speicherknoten in der Form von Speichereinrichtungen 230 oder davon bereitgestellten Massenspeichern durch die Anzahl der Switch Ports der lokalen Verbindungsstruktur in Form der SAS-Switches 280 begrenzt. Im Ausführungsbeispiel sind die SAS-Switches 280 zum Anschluss von zwölf HANA-Servern 210 und maximal acht JBOD-Speichersystemen mit konventionellen Festplatten mit rotierenden, magnetischen Speichermedien konfiguriert. Die Konfiguration gemäß dem Ausführungsbeispiel nach Figur 2 ermöglicht somit eine verhältnismäßig kostengünstige Implementierung eines parallelen Datenbanksystems mit relativ großen Gruppen von 12 Rechnerknoten.

In einer alternativen Ausgestaltung des hochverfügbaren Rechnersystems 200 sind einzelne, ein Teil oder sämtliche Massenspeichergeräte der Speichereinrichtungen 230 als nichtflüchtige Halbleiter-Massenspeichergeräte ausgestaltet. Beispielsweise können die Massenspeichergeräte, die zum Speichern von Logfiles 190 eines parallelen Datenbanksystems eingesetzt werden, als Halbleiter-Massenspeichergeräte ausgelegt werden, während die Massenspeichergeräte, die zur Speicherung von Datenbanksegmenten 140 dienen, als konventionelle Magnetfestplattenlaufwerke ausgelegt werden. Eine derartige Konfiguration stellt einen guten Kompromiss bezüglich einer maximalen Arbeitsgeschwindigkeit des hochverfügbaren Rechnersystems 200 auf der einen Seite und den Kosten des aufzubauenden Rechnersystems auf der anderen Seite dar.

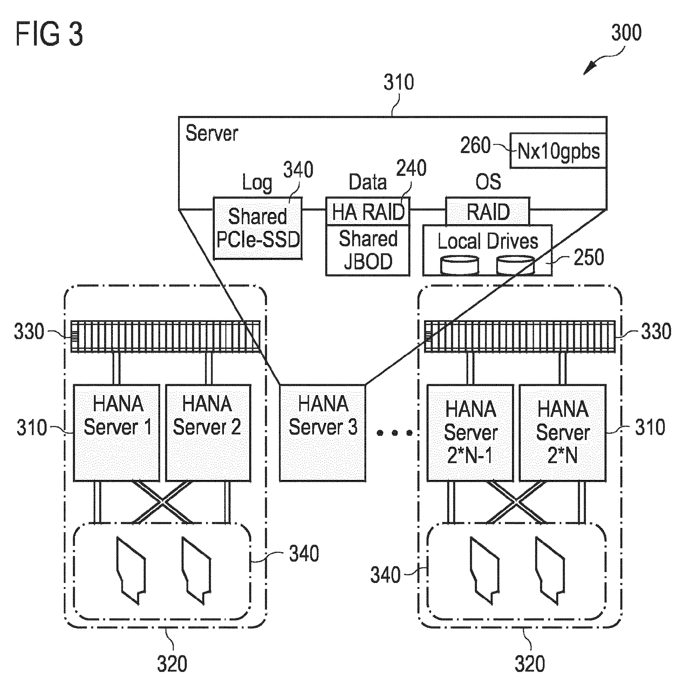

Figur 3 zeigt eine weitere konkrete Konfiguration eines hochverfügbaren Rechnersystems 300 gemäß einer zweiten Ausgestaltung. In der Ausgestaltung gemäß Figur 3 sind jeweils nur zwei HANA-Server 310 in einer gemeinsamen Failover-Gruppe 320 angeordnet. Bei vergleichbarer Anzahl n von aktiven Knoten ergibt sich eine entsprechend höhere Anzahl von Rechnerknoten insgesamt, da jede Failover-Gruppe 320 nur einen aktiven und einen redundanten HANA-Server 310 aufweist. Es ergibt sich somit ein System von 2**n* HANA-Servern 310 in n Failover-Gruppen 320 mit jeweils einem aktiven HANA-Server 310.

Das hochverfügbare Rechnersystem 300 verfügt je Failover-Gruppe 320 über eine Speichervorrichtung 330 mit konventionellen Festplattenlaufwerken oder besonders leistungsfähigen Halbleiter-Massenspeichergeräten zum Speichern von Datenbanksegmenten 140 einer Datenbank 150. Bevorzugt sind die HANA-Server 310 und die Speichervorrichtung 330 in einem gemeinsamen Rack angeordnet. Die einzelnen HANA-Server 310 greifen anders als oben unter Bezugnahme auf die Figur 2 beschrieben über einen Host Adapter 340 direkt auf die Daten der Speichereinrichtung 330 in einer so genannten JBOD-Konfiguration zu. Die Daten der Logfiles 190 des Datenbanksystems werden dagegen auf externen so genannten PCIe-Speicherboxen 340 gespeichert, die jeweils eine Mehrzahl von Halbleiter-Massenspeichergeräten mit je zwei Zugriffsports zum Anschluss an die beiden HANA-Server 310 umfassen. Jeder der beiden HANA-Server 310 einer Failover-Gruppe 320 ist über eine oder mehrer sogenannte PCIe-Lanes, also differenzielle Hochgeschwindigkeitsleitungen, direkt mit den zwei PCIe-Speicherboxen 340 bzw. den darin enthaltenen Halbleiter-Massenspeichergeräten verbunden.

Der Zugriff über den ursprünglich als computerinterner Bus eingesetzten PCIe-Bus erlaubt gegenüber dem Zugriff über einen SAS-Host-Adapter noch einmal deutlich erhöhte Datenübertragungsraten. Zudem ergeben sich durch die verringerte Gruppengröße von nur zwei HANA-Servern 310 je Failover-Gruppe 320 verringerte Probleme beim Zugriff auf die Speichereinrichtungen 330 bzw. die PCIe-Speicherboxen 340, da im normalen Betrieb jeweils nur ein HANA-Server 310 auf die entsprechenden Speicherressourcen zugreift und somit die gesamte Bandbreite der lokalen Verbindungsstruktur nutzen kann. Schließlich wird durch die Aufteilung der Speicherung der Datenbanksegmente 140 und der Logfiles 190 auf unterschiedliche physikalische Speichermedien und lokale Verbindungsstrukturen eine weitere Parallelisierung der Datenübertragung ermöglicht. Insgesamt ermöglicht die in der Figur 3 dargestellte Konfiguration des hochverfügbaren Rechnersystems 300 somit eine noch höhere Gesamtleistung als die bezüglich der Figur 2 beschriebenen Konfigurationen.

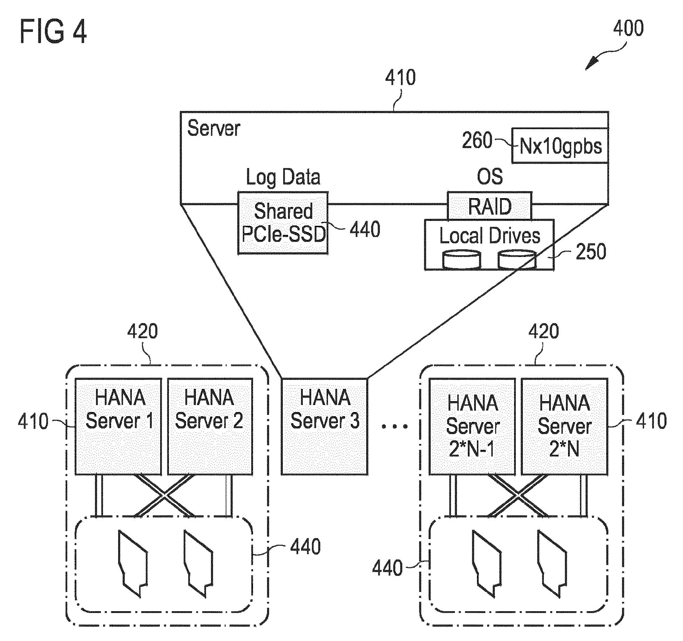

In Figur 4 ist eine weitere Konfiguration eines hochverfügbaren Rechnersystems 400 gemäß einer dritten Ausgestaltung dargestellt. Ähnlich wie in der Ausgestaltung gemäß Figur 3 sind auch hier jeweils nur zwei HANA-Server 410 in einer gemeinsamen Failover-Gruppe 420 angeordnet. Ebenso wie in Figur 3 werden die Logfiles 190 von den HANA-Servern 410 auf PCIe-Speicherboxen 440 mit darin angeordneten Halbleiter-Massenspeichergeräten, die fest mit den HANA-Servern 410 über eine PCIe-Verbindung verbunden sind, gespeichert.

Abweichend von der Ausgestaltung gemäß Figur 3 werden in der Ausgestaltung gemäß Figur 4 jedoch auch die Datenbanksegmente 140 selbst in derselben oder einer weiteren PCIe-Speicherbox 440 abgelegt, sodass die HANA-Server 410 auch auf die Datensegmente 140 selbst mit besonders hoher Geschwindigkeit zugreifen können. Wegen der mit den besonders leistungsfähigen PCIe-Speicherboxen 440 und den darin verbauten nichtflüchtigen Halbleiter-Massenspeichergeräten verbundenen Kosten eignet sich das in Figur 4 dargestellte System insbesondere für Szenarien, wo eine äußerst mögliche Leistung ohne Berücksichtigung der damit verbundenen Kosten erforderlich ist.

Über die konkreten, in den Figuren 2 bis 4 dargestellten Konfigurationen sind eine Vielzahl weiterer Rechnerkonfigurationen vorstellbar, bei denen eine verhältnismäßig kleine Gruppe von Rechnerknoten 110 über geeignete lokale Verbindungsstrukturen mit einem oder mehreren lokalen Speicherknoten 130 verbunden sind, um ein Parallelisierung und damit Beschleunigung von Datenzugriffen beim Laden von großen Mengen von Daten in eine Vielzahl von Rechnerknoten 110 zu ermöglichen.

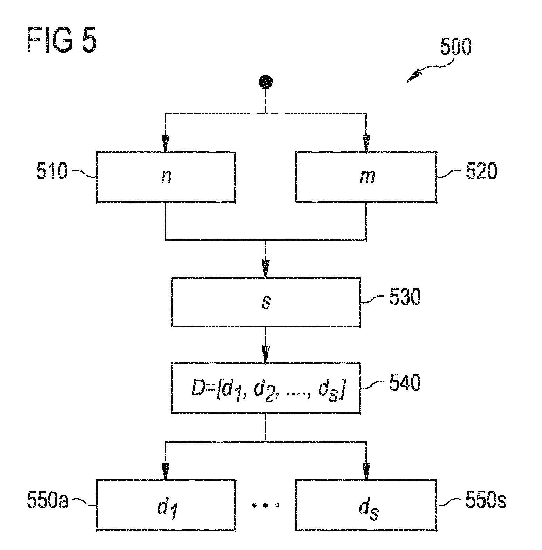

Figur 5 zeigt schematisch ein Verfahren 500 zum Initialisieren eines hochverfügbaren Rechnersystems, beispielsweise des Rechnersystems 100 gemäß Figur 1.

Das Verfahren 500 beginnt mit den Schritten 510 und 520 mit der Bestimmung der Anzahl n insgesamt in dem Rechnersystem 100 zur Verfügung stehenden Rechnerknoten 110 sowie der Bestimmung der Anzahl m der gewünschten Rechnergruppen 120. Die Anzahl m der Rechnergruppen 120 ist beispielsweise durch die Hardware-Konfiguration eines Rechnersystems 100 oder durch ein so genanntes Service-Level-Agreement eines IT-Dienstleisters, also eine vertragliche Absprache, vorgegeben. Bei der Bildung von Gruppen ist zu berücksichtigen, dass nur solche Rechnerknoten 110 und Speicherknoten 130 eine Rechnergruppe 120 zu bilden vermögen, die über eine gemeinsame, lokale Verbindungsstruktur verfügen.

In einem nachfolgenden Schritt 530 wird eine Anzahl s von Datensegmenten bestimmt, die durch das hochverfügbare Rechnersystem 100 verarbeitet werden sollen. Dabei ist zu beachten, dass zur Herstellung der Hochverfügbarkeit jede Rechnergruppe 120 wenigstens einen redundanten Rechnerknoten 110 aufweisen sollte. Stehen beispielsweise insgesamt 20 Rechnerknoten 110 in fünf Rechnergruppen 120 mit jeweils vier Rechnerknoten 110 zur Verfügung, können die zu verarbeitenden Daten daher in maximal fünf mal drei, also fünfzehn Datensegmente aufgeteilt werden. Die verbleibenden fünf Rechnerknoten 110 bilden die redundanten Knoten der fünf Rechnergruppen 120.

Die Aufteilung von zu verarbeitenden Daten D in Datensegmente *d₁* bis *dₛ* erfolgt im Schritt 540. Diese Aufteilung erfolgt in Abhängigkeit der Erfordernisse der jeweiligen Anwendung und wird daher hier nicht im Detail beschrieben. Beispielsweise kann eine umfangreiche Datenbank 150 in Datenbanksegmente 140 mit jeweils einer oder einer Mehrzahl von Tabellen, Spalten und/oder Zeilen aufgeteilt werden, die dann einzeln von unterschiedlichen Rechnerknoten 110 zur Ermittlung eines jeweiligen Teilergebnisses einer Gesamtabfrage abfragbar sind.

In den nachfolgenden Schritten 550a bis 550s werden die zur Bearbeitung von Teilabfragen benötigten Datensegmente *d₁* bis *ds* den Rechnerknoten 110 derart zugeordnet, dass in jeder Rechnergruppe 120 die gewünschte Anzahl von redundanten Rechnerknoten 110 verbleibt. Im oben beschriebenen Teil werden jeder Gruppe von vier Rechnerknoten 110 somit nur drei Datensegmente d zugeordnet. Die zugeordneten Datensegmente d werden dann auf den Speicherknoten 130 gespeichert, die einer jeweiligen Rechnergruppe 120, die die Rechnerknoten 110 zur Ausführung der Teilabfragen enthält, zugeordnet sind. Dabei können die Schritte 550a bis 550s parallel zueinander oder nacheinander ausgeführt werden.

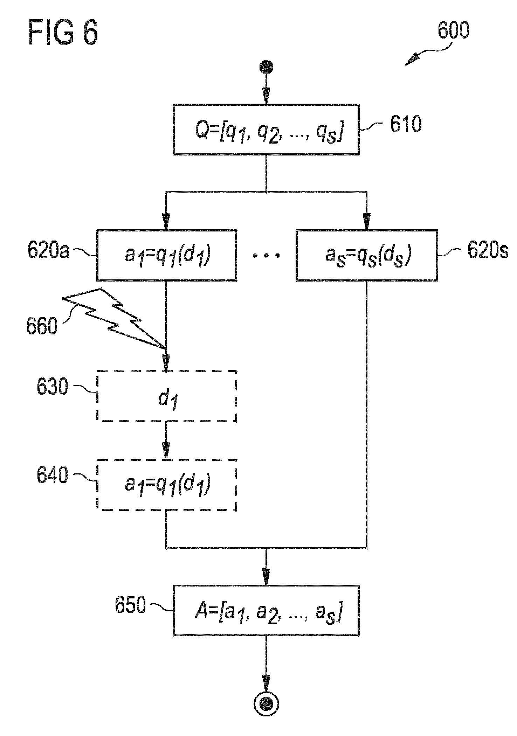

Figur 6 zeigt schematisch ein Betriebsverfahren 600 für das beispielsweise in Figur 1 dargestellte und mit dem Verfahren gemäß Figur 5 initialisierte Rechnersystem 100.

Das Verfahren 600 beginnt in Schritt 610 mit dem Erhalt einer Anfrage *Q*. Beispielsweise kann es sich bei der Abfrage *Q* um eine Datenbankabfrage für eine In-Memory-Datenbank 150 handeln. Im Schritt 610 wird die Gesamtabfrage *Q* auf mehrere Teilabfragen *q₁* bis *qₛ* aufgeteilt, die von den einzelnen Rechnerknoten 110 des hochverfügbaren Rechnersystems 100 getrennt abgearbeitet werden können.

Die Teilabfragen *q₁* bis *qₛ* werden in den parallel zueinander ausgeführten Schritten 620a bis 620s von den dem entsprechenden Datensegment 140 zugeordneten Rechnerknoten 110 ausgeführt. Beispielsweise führt ein erster Rechnerknoten 110a einer ersten Rechnergruppe 120a die erste Teilabfrage *q₁* über ein erstes Datenbanksegment *d₁* umfassend eine erste Tabelle oder einen ersten Teilabschnitt einer Tabelle einer umfangreichen Datenbank 150 aus und ermittelt die zugehörige Teilantwort *a₁.* Äquivalent übernimmt ein Rechnerknoten 110s der *m*-ten Rechnergruppe 120*m* die Ausführung der Abfrage *qₛ* über das Datensegment *dₛ* umfassend eine weitere Tabelle oder einen weiteren Teilabschnitt der umfangreichen Datenbank 150 zur Ermittlung der s-ten Teilantwort *aₛ*.

Sofern die einzelnen Teilabfragen *q₁* bis *qₛ* von den einzelnen Rechnerknoten 110 erfolgreich abgearbeitet werden können, wird in einem Schritt 650, beispielsweise durch einen zentralen Steuerrechner oder durch einen geeigneten Client-Rechner 160, eine Gesamtantwort A aus den Teilantworten *a₁* bis *aₛ* bestimmt und an den anfragenden Nutzer oder die anfragenden Anwendung zurückgeschickt.

Die Figur 6 zeigt zusätzlich den Ablauf des Verfahrens 600 beim Auftreten einer Störung 660. Wird beispielsweise die Ausführung der ersten Teilabfrage *q₁* in Schritt 620a gestört, beispielsweise bei einem Hardwaredefekt oder Software-Absturz des ersten Rechnerknotens 110, lädt ein redundanter Rechnerknoten 110 in einem Schritt 630 das vormals von dem Rechnerknoten 110a bearbeitete Datensegment *d₁.* Alternativ oder zusätzlich kann der redundante Rechnerknoten 110 auch den Speicherinhalt des ausgefallenen Rechnerknotens 110a übernehmen, beispielsweise durch Auswertung des oben beschriebenen Logfiles 190. Das Nachladen von Daten durch den redundanten Rechnerknoten 110 behindert dabei die parallele Ausführung anderer Teilabfragen q durch Rechnerknoten 110 anderer Rechnergruppen 120 gar nicht und die parallele Ausführung von anderen Teilabfragen q durch Rechnerknoten 110 derselben Rechnergruppen 120 gar nicht oder nur sehr wenig, da die Rechnerknoten 110 und zugehörigen Speicherknoten 130 stets über leistungsfähige, lokalen Verbindungsstrukturen miteinander verbunden sind.

In einem nachfolgenden Schritt 640 führt der redundante Rechnerknoten 110 dann die Abfrage *q₁* über das Datenbanksegment *d₁* aus, um das angeforderte Teilergebnis a₁ zu erhalten. Das durch den redundanten Rechnerknoten 110 ermittelte Teilergebnis *a₁* wird dann, wie oben beschrieben, mit den Teilergebnissen der anderen Rechnerknoten in einem Schritt 650 zu einer Gesamtantwort A verknüpft. Für den Benutzer ist der Ausfall des einzelnen Rechnerknotens 110 somit nur in Form einer höheren Antwortzeit wahrnehmbar. Obwohl das erfindungsgemäße hochverfügbare Rechnersystem 100 und die dafür geeigneten Arbeitsverfahren 500 und 600 anhand einer so genannten parallelen In-Memory-Datenbank erläutert wurden, eignet sich die darin beschriebene Architektur auch zur Lösung einer Vielzahl anderer rechen- und/oder datenintensiver Probleme der elektronischen Datenverarbeitung, wie sie insbesondere beim so genannten Grid-Computing, umfangreichen Simulationen, dem Data Mining und ähnlichen Problemen der elektronischen Datenverarbeitung auftreten.

Ein Element der beschriebenen Architektur und Arbeitsverfahren liegen unter anderem in der Aufteilung eines einzigen Pools von Rechnerknoten 110 in eine Vielzahl von jeweils redundanten Rechnergruppen 120, wobei jede Rechnergruppe 120 wenigstens einen redundanten Rechnerknoten 110 enthält. Durch die Verringerung der Größe der Rechnergruppen 120 auf eine gegenüber der Gesamtzahl n der eingesetzten Rechnerknoten 110 verminderte Anzahl wird die Verwendung von lokalen Verbindungsstrukturen mit einer verhältnismäßig kleinen Anzahl von Verzweigungen (englisch: fan-out), insbesondere so genannten Direct Attached Storage oder InfiniBand-Verbindungen mit geringer Latenz und hoher Bandbreite, beispielsweise über so genannte geswitchte PCIe-Verbindungen, ermöglicht. Alternativ oder zusätzlich sind auch direkte Zugriffe auf die Hauptspeicher der einzelnen Rechnerknoten 110 einer Rechnergruppe 120 untereinander gemäß einem RDMA-Standard möglich.

Durch eine derartige Partitionierung können die extremen Ein-/Ausgabedatenraten von beispielsweise 1GB/s und mehr von Massenspeichergeräten neuerer Bauart, wie insbesondere Halbleiter-Massenspeichergeräten, komplett ausgenutzt werden, ohne die benötigte Redundanz innerhalb einer redundanten Rechnergruppe 120 einzubüßen. Dabei wird, bedingt durch die Partitionierung, jedoch die Anzahl der erforderlichen vorzuhaltenden redundanten Rechnerknoten 110 entsprechend der Anzahl m der eingesetzten Rechnergruppen 120 erhöht.

Die Erfindung eignet sich damit insbesondere für besonders hochleistungsfähige parallel arbeitende, hochverfügbare Rechnersysteme 100 mit einer Vielzahl von Rechnerknoten 110. Zusammengenommen weisen die Rechnerknoten 110 einen sehr großen Hauptspeicher von beispielsweise 1 TB oder mehr Speicherkapazität zur Verarbeitung umfangreicher Daten auf. Beispielsweise kann ein Rechnersystem 100 mit mehreren zehn oder hundert Rechnerknoten 110 in Rechnergruppen 120 von beispielsweise 2, 4, 8 oder 16 Rechnerknoten 110 mit jeweils einem oder mehreren in der Gruppe enthaltenen redundanten Rechnerknoten 110 partitioniert werden. Die in den Figuren 1 bis 6 dargestellten und in der Beschreibung von Ausführungsbeispielen ausführlich beschriebenen Merkmale der einzelnen Systeme und Verfahren können in vielfältiger Weise miteinander kombiniert werden, um die jeweils beschriebenen Vorteile zu erzielen.

## Patentansprüche

1. Hochverfügbares Rechnersystem (100), das dazu eingerichtet ist, eine parallel arbeitende Datenbank (150) bereitzustellen, deren Daten in eine Mehrzahl von unabhängig abfragbaren Datenbanksegmenten (140) aufgeteilt ist, umfassend:
- eine Mehrzahl von Rechnerknoten (110) zur parallelen Datenverarbeitung, wobei jeder Rechnerknoten (110) mindestens eine Datenverarbeitungskomponente und einen Arbeitsspeicher aufweist,
- eine Mehrzahl von Speicherknoten (130), wobei jeder Speicherknoten (130) mindestens einen nichtflüchtigen Massenspeicher aufweist, und
- wenigstens ein Datennetzwerk (170) zum Zugriff auf die Mehrzahl von Rechnerknoten (110),
- bei dem im Betrieb des Rechnersystems (100) jedes Datenbanksegment (140) einem Rechnerknoten (110) der Mehrzahl von Rechnerknoten (110) zugeordnet und in dem Arbeitsspeicher des zugeordneten Rechnerknotens (110) gespeichert ist,
**dadurch gekennzeichnet, dass**
- die Mehrzahl von Rechnerknoten (110) in eine Mehrzahl von Rechnergruppen (120) partitioniert ist,
- jede der Mehrzahl der Rechnergruppen (120) wenigstens einen redundanten Rechnerknoten (110) aufweist,
- jeder Speicherknoten (130) der Mehrzahl von Speicherknoten (130) genau einer Rechnergruppe (120) der Mehrzahl von Rechnergruppen (120) zugeordnet ist und
- jede Rechnergruppe (120) eine der jeweiligen Rechnergruppe (120) zugeordnete lokale Verbindungsstruktur aufweist, welche die der jeweiligen Rechnergruppe (120) zugeordneten Speicherknoten (130) mit Rechnerknoten (110) der jeweiligen Rechnergruppe (120) verbindet.

2. Hochverfügbares Rechnersystem (100) nach Anspruch 1, bei dem wenigstens einer ersten Rechnergruppe (120a) mit einer ersten Anzahl von Rechnerkonten (110a, 110b, 110c, 110d) eine zweite Anzahl von Datenbanksegmenten (140a, 140b, 140c) zugeordnet ist, wobei die zweite Anzahl kleiner als die erste Anzahl ist und die der zweiten Anzahl von Datenbanksegmenten (140a, 140b, 140c) zugeordneten Daten der Datenbank (150) auf wenigstens einem der ersten Rechnergruppe (120a) zugeordneten Speicherknoten (130a) persistent gespeichert sind.

3. Hochverfügbares Rechnersystem (100) nach Anspruch 2, bei dem jeder Rechnerknoten (110a, 110b, 110c, 110d) der ersten Rechnergruppe (120a) dazu eingerichtet ist, Datenbankänderungen auf wenigstens einem der ersten Rechnergruppe (120a) zugeordneten Speicherknoten (130b) persistent zu speichern, sodass beim Ausfall eines ersten Rechnerknotens (110a) der ersten Rechnergruppe (120a) der zumindest eine redundante Rechnerknoten (110d) der ersten Rechnergruppe (120a) durch Laden der Daten des dem ersten Rechnerknoten (110a) zugeordneten Datenbanksegmentes (140a) und/oder der Datenbankänderungen des ersten Rechnerknotens (110a) von einem lokal mit dem redundanten Rechnerknoten (110a) verbundenen Speicherknoten (130a, 130b) die Aufgaben des ausgefallenen ersten Rechnerknotens (110a) übernehmen kann.

4. Hochverfügbares Rechnersystem (100) nach einem der Ansprüche 1 bis 3, wobei die wenigstens eine den jeweiligen Rechnergruppen (120) zugeordnete lokale Verbindungsstruktur eine Bandbreite aufweist, die größer als eine Bandbreite des wenigstens einen Datennetzwerks (170) zum Zugriff auf die Mehrzahl von Rechnerknoten (110) ist.

5. Hochverfügbares Rechnersystem (100) nach einem der Ansprüche 1 bis 4, bei dem die lokale Verbindungsstruktur wenigstens einer ersten Rechnergruppe (120a) wenigstens eine parallele Switching-Fabric (180) zum selektiven Verbinden der Rechnerknoten (110a, 110b, 110c, 110d) der ersten Rechnergruppe (120a) mit den der ersten Rechnergruppe (120a) zugeordneten Speicherknoten (130a, 130b) über eine Mehrzahl von zueinander parallelen Verbindungspfaden aufweist.

6. Hochverfügbares Rechnersystem (100) nach einem der Ansprüche 1 bis 5, bei dem jeder Rechnerknoten (110a, 110b, 110c, 110d) der ersten Rechnergruppe (120a) mit jedem der der ersten Rechnergruppe (120a) zugeordneten Speicherknoten (130a, 130b) über einen parallelen Verbindungspfad verbunden ist, wobei ein Grad der Parallelität des parallelen Verbindungspfades größer als zwei, bevorzugt vier, und/oder größer als die Anzahl der der Rechnerknoten (110a, 110b, 110c, 110d) der ersten Rechnergruppe (120a) ist.

7. Hochverfügbares Rechnersystem (100) nach einem der Ansprüche 1 bis 6, bei dem wenigstens ein erster Rechnerknoten (110) wenigstens einer ersten Rechnergruppe (120) in einer ersten Baugruppe eines Serversystems und wenigstens ein der ersten Rechnergruppe (120) zugeordneter erster Speicherknoten (130) in einer zweiten Baugruppe des Serversystems angeordnet und über wenigstens eine Direct Attached Storage, DAS, Verbindung miteinander verbunden sind.

8. Hochverfügbares Rechnersystem (100) nach Anspruch 7, bei dem die wenigstens eine DAS-Verbindung wenigstens eine Datenverbindung gemäß dem Small Computer System Interface, SCSI, und/oder dem PCI-Express, PCIe, Standard, insbesondere gemäß dem Serial Attached SCSI, SAS, und/oder dem SCSI over PCIe, SOP, Standard umfasst.

9. Hochverfügbares Rechnersystem (100) nach einem der Ansprüche 1 bis 6, bei dem wenigstens ein erster Rechnerknoten (110) wenigstens einer ersten Rechnergruppe (120) und wenigstens ein der ersten Rechnergruppe (120) zugeordneter erster Speicherknoten (130) über wenigstens eine serielle Hochgeschwindigkeitsleitung, insbesondere gemäß dem InfiniBand-Standard, miteinander verbunden ist.

10. Hochverfügbares Rechnersystem (100) nach einem der Ansprüche 1 bis 9, bei dem wenigstens zwei Rechnerknoten (110) einer ersten Rechnergruppe (120) über die der Rechnergruppe (120) zugeordnete lokale Verbindungsstruktur derart miteinander verbunden sind, dass der erste Rechnerknoten (110) gemäß einem Remote Direct Memory Access, RDMA, Protokoll direkt auf den Inhalt des Arbeitsspeichers des zweiten Rechnerknotens (110) zugreifen kann.

11. Hochverfügbares Rechnersystem (100) nach einem der Ansprüche 1 bis 10, bei dem wenigstens ein erster Speicherknoten (130) einen Controller mit einer Mehrzahl von Zugriffs-Ports zum gleichzeitigen Anschluss an eine Mehrzahl von Rechnerknoten (110) der dem Speicherknoten (130) zugeordneten Rechnergruppe (120) aufweist und/oder bei dem wenigstens ein erster Rechnerknoten (110) einer Rechnergruppe (120) einen Host-Bus-Adapter (240, 340) mit einer Mehrzahl von Zugriffs-Ports zum gleichzeitigen Anschluss an eine Mehrzahl von der Rechnergruppe (120) zugeordneten Speicherknoten (130) aufweist.

12. Hochverfügbares Rechnersystem (100) nach einem der Ansprüche 1 bis 11, bei dem wenigstens ein erster Speicherknoten (130) wenigstens ein Halbleiter-Massenspeichergerät aufweist.

13. Verwendung eines hochverfügbaren Rechnersystems (100) nach einem der Ansprüche 1 bis 12 in einer On-Line Analytical Processing, OLAP, oder On-Line Transaction Processing, OLTP, Datenbank Appliance oder einer In-Memory Datenbank Appliance.

## Claims

1. High-availability computer system (100), which is configured to provide a parallel-operating database (150), the data of which are divided up into a plurality of independently interrogatable database segments (140), comprising
- a plurality of computer nodes (110) for parallel data processing, wherein each computer node (110) has at least one data processing component and a main memory,
- a plurality of storage nodes (130), wherein each storage node (130) has at least one non-volatile mass storage device, and
- at least one data network (170) for accessing the plurality of computer nodes (110),
- in which, in the operation of the computer system (100), each database segment (140) is allocated to a computer node (110) of the plurality of computer nodes (110) and is stored in the data memory of the allocated computer node (110),
**characterized in that**
- the plurality of computer nodes (110) is partitioned into a plurality of computer groups (120),
- each of the plurality of computer groups (120) has at least one redundant computer node (110),
- each storage node (130) of the plurality of storage nodes (130) is allocated to precisely one computer group (120) of the plurality of computer groups (120), and
- each computer group (120) has a local connection structure allocated to the respective computer group (120), said structure connecting the storage nodes (130) allocated to the respective computer group (120) to computer nodes (110) of the respective computer group (120).

2. High-availability computer system (100) according to Claim 1, in which a second number of database segments (140a, 140b, 140c) is allocated to at least one first computer group (120a) with a first number of computer nodes (110a, 110b, 110c, 110d), wherein the second number is smaller than the first number and the data of the database (150) allocated to the second number of database segments (140a, 140b, 140c) are permanently stored on at least one of the storage nodes (130a) allocated to the first computer group (120a).

3. High-availability computer system (100) according to Claim 2, in which each computer node (110a, 110b, 110c, 110d) of the first computer group (120a) is configured to permanently store database changes on at least one storage node (130b) allocated to the first computer group (120a) so that, if a first computer node (110a) of the first computer group (120a) fails, the at least one redundant computer node (110d) of the first computer group (120a) can take over the tasks of the failed first computer node (110a) by loading the data of the database segment (140a) allocated to the first computer node (110a) and/or the database changes of the first computer node (110a) from a storage node (130a, 130b) locally connected to the redundant computer node (110a).

4. High-availability computer system (100) according to one of Claims 1 to 3, wherein the at least one local connection structure allocated to the respective computer groups (120) has a bandwidth which is greater than a bandwidth of the at least one data network (170) for accessing the plurality of computer nodes (110).

5. High-availability computer system (100) according to one of Claims 1 to 4, in which the local connection structure of at least one first computer group (120a) has at least one parallel switching fabric (180) for the selective connection of the computer nodes (110a, 110b, 110c, 110d) of the first computer group (120a) to the storage nodes (130a, 130b) allocated to the first computer group (120a) via a plurality of connection paths parallel to one another.

6. High-availability computer system (100) according to one of Claims 1 to 5, in which each computer node (110a, 110b, 110c, 110d) of the first computer group (120a) is connected to each of the storage nodes (130a, 130b) allocated to the first computer group (120a) via a parallel connection path, wherein a degree of parallelism of the parallel connection path is greater than two, preferably four, and/or greater than the number of computer nodes (110a, 110b, 110c, 110d) of the first computer group (120a).

7. High-availability computer system (100) according to one of Claims 1 to 6, in which at least one first computer node (110) of at least one first computer group (120) is arranged in a first module of a server system and at least one first storage node (130) allocated to the first computer group (120) is arranged in a second module of the server system and are interconnected via at least one Direct Attached Storage, DAS, connection.

8. High-availability computer system (100) according to Claim 7, in which the at least one DAS connection comprises at least one data connection according to the Small Computer System Interface, SCSI, and/or the PCI Express, PCIe, standard, in particular according to the Serial Attached SCSI, SAS, and/or the SCSI over PCIe, SOP, standard.

9. High-availability computer system (100) according to one of Claims 1 to 6, in which at least one first computer node (110) of at least one first computer group (120) and at least one first storage node (130) allocated to the first computer group (120) are interconnected via at least one serial high-speed line, in particular according to the InfiniBand standard.

10. High-availability computer system (100) according to one of Claims 1 to 9, in which at least two computer nodes (110) of a first computer group (120) are interconnected via the local connection structure allocated to the computer group (120) in such a way that the first computer node (110) can access the content of the main memory of the second computer node (110) directly according to a Remote Direct Memory Access, RDMA, protocol.

11. High-availability computer system (100) according to one of Claims 1 to 10, in which at least one first storage node (130) is a controller with a plurality of access ports for simultaneous connection to a plurality of computer nodes (110) of the computer group (120) allocated to the storage node (130) and/or in which at least one first computer node (110) of a computer group (120) has a host bus adapter (240, 340) with a plurality of access ports for simultaneous connection to a plurality of storage nodes (130) allocated to the computer group (120).

12. High-availability computer system (100) according to one of Claims 1 to 11, in which at least one first storage node (130) has at least one semiconductor mass storage device.

13. Use of a high-availability computer system (100) according to one of Claims 1 to 12 in an On-Line Analytical Processing, (OLAP) or an On-Line Transaction Processing (OLTP) database appliance or an in-memory database appliance.

## Revendications

1. Système informatique à haute disponibilité (100) conçu pour fournir une base de données fonctionnant en parallèle (150) dont les données sont réparties dans une pluralité de segments de base de données interrogeables indépendamment les uns des autres (140), comprenant :
- une pluralité de noeuds d'ordinateurs (110) destinés à effectuer un traitement parallèle de données, dans lequel chaque noeud d'ordinateur (110) comporte au moins un composant de traitement de données et une mémoire de travail,
- une pluralité de noeuds de mémoire (130), dans lequel chaque noeud de mémoire (130) comporte au moins une mémoire de masse non volatile, et
- au moins un réseau de données (170) permettant d'accéder à la pluralité de noeuds d'ordinateurs (110),
- dans lequel, lors du fonctionnement du système informatique (100), chaque segment de base de données (140) est associé à un noeud d'ordinateur (110) de la pluralité de noeuds d'ordinateurs (110) et est stocké dans la mémoire de travail du noeud d'ordinateur (110) associé,
**caractérisé en ce que**
- la pluralité de noeuds d'ordinateurs (110) est partitionnée en une pluralité de groupes d'ordinateurs (120),
- chacun de la pluralité des groupes d'ordinateurs (120) comporte au moins un noeud d'ordinateur (110) redondant,
- chaque noeud de mémoire (130) de la pluralité de noeuds de mémoire (130) est associé à exactement un groupe d'ordinateurs (120) de la pluralité de groupes d'ordinateurs (120), et
- chaque groupe d'ordinateurs (120) comporte une structure de connexion locale associée à l'un des groupes d'ordinateurs respectifs (120), qui connecte les noeuds de mémoire (130) associés au groupe d'ordinateurs (120) respectif à des noeuds d'ordinateurs (110) du groupe d'ordinateurs (120) respectifs.

2. Système informatique à haute disponibilité (100) selon la revendication 1, dans lequel un second nombre de segments de base de données (140a, 140b, 140c) est associé à au moins un premier groupe d'ordinateurs (120a) ayant un premier nombre de noeuds d'ordinateurs (110a, 110b, 110c, 110d), dans lequel le second nombre est inférieur au premier nombre et les données de la base de données (150) qui sont associées au second nombre de segments de base de données (140a, 140b, 140c) sont stockées de manière persistante dans au moins un noeud de mémoire (130a) associé au premier groupe d'ordinateurs (120a).

3. Système informatique à haute disponibilité (100) selon la revendication 2, dans lequel chaque noeud d'ordinateur (110a, 110b, 110c, 110d) du premier groupe d'ordinateurs (120a) est conçu pour stocker de manière persistante des modifications de la base de données dans au moins un noeud de mémoire (130b) associé au premier groupe d'ordinateurs (120a) de manière à ce que, en cas de panne d'un premier noeud d'ordinateur (110a) du premier groupe d'ordinateurs (120a), l'au moins un noeud d'ordinateur redondant (110d) du premier groupe d'ordinateurs (120a) puisse jouer le rôle du premier noeud d'ordinateur (110a) défectueux par chargement des données du segment de base de données (140a) associé au premier noeud d'ordinateur (110a) et/ou des modifications de la base de données du premier noeud d'ordinateur (110a) d'un noeud de mémoire (130a, 130b) connecté localement au noeud d'ordinateur redondant (110a).

4. Système informatique à haute disponibilité (100) selon l'une quelconque des revendications 1 à 3, dans lequel l'au moins une structure de connexion locale associée aux groupes d'ordinateurs (120) respectifs présente une largeur de bande supérieure à une largeur de bande de l'au moins un réseau de données (170) pour accéder à la pluralité de noeuds d'ordinateurs (110).

5. Système informatique à haute disponibilité (100) selon l'une quelconque des revendications 1 à 4, dans lequel la structure de connexion locale d'au moins un premier groupe d'ordinateurs (120a) comporte au moins une matrice de commutation (180) destinée à connecter sélectivement les noeuds d'ordinateurs (110a, 110b, 110c, 110d) du premier groupe d'ordinateurs (120a) au noeud de mémoire (130a, 130b) associé au premier groupe d'ordinateurs (120a) par l'intermédiaire d'une pluralité de trajets de connexion parallèles les uns aux autres.

6. Système informatique à haute disponibilité (100) selon l'une quelconque des revendications 1 à 5, dans lequel chaque noeud d'ordinateur (110a, 110b, 110c, 110d) du premier groupe d'ordinateurs (120a) est connecté à chacun des noeuds de mémoire (130a, 130b) associés au premier groupe d'ordinateurs (120a) par l'intermédiaire d'un trajet de connexion parallèle, dans lequel un degré de parallélisme du trajet de connexion parallèle est supérieur à deux et de préférence est supérieur à quatre et/ou est supérieur au nombre des noeuds d'ordinateurs (110a, 110b, 110c, 110d) du premier groupe d'ordinateurs (120a).

7. Système informatique à haute disponibilité (100) selon l'une quelconque des revendications 1 à 6, dans lequel au moins un premier noeud d'ordinateur (110) d'au moins un premier groupe d'ordinateurs (120) est disposé dans un premier module d'un système serveur et au moins un premier noeud de mémoire (130) associé au premier groupe d'ordinateurs (120) est disposé dans un second module du système serveur et ceux-ci sont connectés l'un à l'autre par l'intermédiaire d'une connexion de type Direct Attached Storage, DAS.

8. Système informatique à haute disponibilité (100) selon la revendication 7, dans lequel l'au moins une connexion DAS comprend au moins une connexion de données respectant la norme Small Computer System Interface, SCSI, et/ou la norme PCI-Express, PCIe, notamment la norme Serial Attached SCSI, SAS et/ou la norme SCSI sur PCIe, SOP.

9. Système informatique à haute disponibilité (100) selon l'une quelconque des revendications 1 à 6, dans lequel au moins un premier noeud d'ordinateur (110) d'au moins un premier groupe d'ordinateurs (120) et au moins un premier noeud de mémoire (130) associé au premier groupe d'ordinateurs (120) sont connectés l'un à l'autre par l'intermédiaire d'au moins un conducteur série à haut débit respectant notamment la norme InfiniBand.

10. Système informatique à haute disponibilité (100) selon l'une quelconque des revendications 1 à 9, dans lequel au moins deux noeuds d'ordinateurs (110) d'un premier groupe d'ordinateurs (120) sont connectés l'un à l'autre par l'intermédiaire de la structure de connexion locale associée au groupe d'ordinateurs (120) de manière à ce que le premier noeud d'ordinateur (110) puisse directement accéder au contenu de la mémoire de travail du second noeud d'ordinateur (110) conformément à un protocole de type Remote Direct Memory Access, RDMA.

11. Système informatique à haute disponibilité (100) selon l'une quelconque des revendications 1 à 10, dans lequel au moins un premier noeud de mémoire (130) comporte un contrôleur ayant une pluralité de ports d'accès permettant un raccordement simultané à une pluralité de noeuds d'ordinateurs (110) du groupe d'ordinateurs (120) associé au noeud de mémoire (130) et/ou dans lequel au moins un premier noeud d'ordinateur (110) d'un groupe d'ordinateurs (120) comporte un adaptateur de bus hôte (240, 340) ayant une pluralité de ports d'accès permettant un raccordement simultané à une pluralité de noeuds de mémoire (130) associés au groupe d'ordinateurs (120).

12. Système informatique à haute disponibilité (100) selon l'une quelconque des revendications 1 à 11, dans lequel au moins un premier noeud de mémoire (130) comporte au moins un dispositif de mémoire de masse à semi-conducteur.

13. Utilisation d'un système informatique à haute disponibilité (100) selon l'une quelconque des revendications 1 à 12 dans une installation de base de données du type à Traitement Analytique en Ligne, OLAP (On-Line Analytical Processing), ou du type à Traitement de Transaction en Ligne, OLTP (On-Line Transaction Processing).
